# EUROPEAN PATENT APPLICATION

(11) **EP 4 793 136 A1**
(43) Date of publication of application: **19.08.2026**
(21) Application number: 25158663.2
(22) Date of filing: 18.02.2025
(51) Int. Cl.: B62D 5/24, B62D 5/083

(54) **STEERING SYSTEM FOR A VEHICLE**

(71) Applicant: Volvo Truck Corporation, 405 08 Göteborg (SE)
(72) Inventor: Klostermann, André Luís, 423 37 Torslanda (SE); Araujo, Tiago, 423 37 Torslanda (SE)
(74) Representative: Ex Materia

(57) **Abstract**

The disclosure relates to a steering system (1) comprising two chambers (20, 22), a fluid circuit (12) in fluid communication with the chambers, a piston (24) separating the chambers, a guide element (30), a first transmission element (4) configured to transmit a rotational force to a rotary valve (10) able to take:
a first/second, position, in which the fluid circuit is in communication with one chamber,
a third position, in which the fluid circuit is isolated from the chambers,
the piston sliding along the guide element in a direction depending on the position of the rotary valve, and configured to cooperate with a second transmission element (6), the steering system comprising a torsion device (36) configured to move the rotary valve and comprising :
a torsion bar (38) fixed to the rotary valve and the guide element,
a coupling mechanism (42) configured to limit a torsion of the torsion bar.

## Description

### TECHNICAL FIELD

The present disclosure relates to the field of motor vehicles, and more particularly to steering systems for vehicles.

### BACKGROUND

In a motor vehicle, steering is generally provided, at least in part, by a steering system designed to assist in the rotation of the steering wheel and limit the play of the steering wheel.

These steering systems can be hydraulic, using pressurized fluid to transmit the rotational force applied to the steering wheel. More specifically, hydraulic steering systems generally include a drive shaft that transmits the rotational force from the steering wheel to a rotary valve. The rotation of this rotary valve causes the torsion of a torsion bar, which in turn drives the movement of a piston. This piston movement is amplified by the circulation of pressurized fluid within the mechanism, controlled by the position of the rotary valve. The piston then drives a second drive shaft, which is directly or indirectly connected to the vehicle's wheels, enabling their rotation.

It should be noted, however, that in certain cases, the steering system may not be supplied with fluid. This occurs particularly in some vehicles equipped with systems known as engine sailing.

Engine sailing involves shutting off the engine and disengaging the clutch when a vehicle is traveling at a certain speed, without the accelerator or brakes being applied, in order to reduce fuel consumption. The engine automatically restarts as soon as a power demand is required.

When the engine is turned off, it no longer provides the necessary pressure to the steering system with fluid. As a result, the pressure required to assist the movement of the piston is no longer provided. Therefore, only the movement applied to the steering wheel by the driver causes the piston to move, and it is solely the force exerted by the driver that enables the vehicle's wheels to turn.

There are solutions available to circumvent this lack of pressure. Prior art notably uses hydraulic assistance to maintain the fluid pressure within the steering system.

There are also solutions that do not rely on hydraulic assistance, such as the integration of sensors and an electric motor connected to the steering system. The sensors measure the torque applied by the driver and add additional torque to the input shaft of the steering system, thereby lightening the steering while providing stability and supporting functions for the vehicle's driver assistance systems.

The issue lies in the fact that hydraulic and electro-hydraulic (i.e. hybrid) steering systems are designed to operate with hydraulic fluid, which exerts pressure on the piston. However, when the engine is off, there is no longer any pressure to assist the piston's movement. Therefore, only the mechanical movement transmitted through the torsion bar enables the vehicle's wheels to rotate. The use of a torsion bar means that the piston begins to move only once the bar twists under the effect of the steering wheel's rotation. Thus, before the piston starts to move, it is necessary to wait for the torsion bar to twist, which results in play in the steering wheel. This play can lead to a delay in the wheels' response, making driving uncomfortable and, in certain situations, dangerous, particularly while driving in curves.

The disclosed technology aims to solve this problem by offering a steering system equipped with a torsion device, ensuring a stable and comfortable driving experience, both when the engine is on and when it is off. This torsion device thus eliminates the play that could lead to dangerous driving situations.

### SUMMARY

The main object of the disclosed technology is thus a steering system for a vehicle, comprising a first transmission element, a first chamber, a second chamber, a fluid circuit intended to be in fluid communication with the first chamber or the second chamber, a piston, a guide element, the first transmission element being configured to transmit a rotational force provided by a steering wheel of the vehicle to the rotary valve, said rotary valve being able to take:
- a first position, in which the fluid circuit is in fluid communication with the first chamber,
- a second position, in which the fluid circuit is in fluid communication with the second chamber,
- a third position, in which the fluid circuit is fluidically isolated from the first chamber and the second chamber,
the first chamber and the second chamber being separated by the piston, the piston being configured to slide along the guide element in a first direction or in a second direction depending on the position of the rotary valve, said piston being configured to cooperate with a second transmission element, characterized in that the steering system comprises a torsion device arranged within a bore of the guide element, the torsion device being configured to move the rotary valve from the first position or the second position to the third position, the torsion device comprising :
- a torsion bar fixed to the rotary valve and the guide element,
- a coupling mechanism configured to limit a torsion of the torsion bar in a fluid supply shutdown state of the steering system in which no pressurized fluid is supplied to the steering system

The rotational force applied by the driver to the steering wheel allows the first transmission element to rotate, which in turn causes the rotary valve to rotate in a first rotational direction or a second rotational direction opposite to the first rotational direction.

The rotation in the first rotational direction of the rotary valve allows it to take its first position. The rotation in the second rotational direction of the rotary valve allows it to take its second position. The third position of the rotary valve is reached when the driver does not turn the steering wheel.

The movement of the rotary valve is then transmitted to the torsion bar, as said torsion bar is connected to the rotary valve. The torsion bar then twists, and this torsion causes the rotation of the guide element. As a non-limiting example, the torsion bar is made of steel and has a diameter ranging from 5.8 mm to 7.4 mm, with a length of approximately 210 mm. The torsional stiffness of the torsion bar therefore varies between 6.49 Newton-meter per radian (Nm/rad) and 27.83 Newton-meter per radian (Nm/rad). It is emphasized that these values are provided for illustrative purposes only, and other diameters, materials, lengths, and torsional stiffness values are also contemplated.

The rotation of the guide element then induces a linear displacement of the piston, either in a first linear direction or in a second linear direction, depending on whether the steering wheel is turned in the first rotational direction or the second rotational direction.

This linear displacement of the piston then causes the rotation of the second transmission element, which allows a left or right rotation of the vehicle wheels.

When the engine is running, pressurized fluid is supplied to the steering system, which helps the movement of the piston. More specifically, in the first position of the valve, the fluid circulates in the first chamber and pushes the piston in the first linear direction, while in the second position of the valve, the fluid circulates in the second chamber and pushes the piston in the second linear direction.

When the engine is off, pressurized fluid is not supplied to the steering system. In this case, regardless of the position of the rotary valve, the fluid does not assist in moving the piston.

The movement of the piston is then solely due to the force transmitted by the first transmission element, which is then transmitted to the rotary valve, then to the torsion bar, and finally to the guide element.

However, the torsion of the torsion bar causes play in the steering wheel, as the force applied to the steering wheel can initially result in the torsional deformation of the torsion bar rather than the movement of the wheels. This phenomenon occurs because, depending on a balance of forces within the system, the resistance to wheel rotation may be greater than the resistance to torsional deformation of the bar. Consequently, the rotation of the wheels only occurs once the torsion bar reaches its mechanical stop or when the equilibrium of forces shifts to favor the transmission of movement to the wheels.

The coupling mechanism thus helps to limit this torsion of the torsion bar to reduce the play in the steering wheel, which allows for more efficient transmission of the movement from the transmission element to the guide element.

On the contrary, when the engine is running and the pressurized fluid is sent into the steering system, it is not necessary to limit the torsion of the torsion bar. In this case, the coupling mechanism does not limit the torsion of the torsion bar. In other words, the coupling mechanism enables to adapt the torsion of the torsion bar when required, i.e. when no pressurized fluid is supplied to the steering system, to avoid the play perceived by the driver.

Several technical solutions can be implemented to adjust the torsion of the torsion bar, whether to limit or increase it, and these solutions will be detailed in the following description.

Optionally in some examples, including in at least one preferred example, the coupling mechanism is configured to lock and/or unlock the guide element to the first transmission element.

A first solution to limit the torsion of the torsion bar consists in using a coupling mechanism that allows the guide element to be locked or unlocked relative to the first transmission element.

Thus, by locking the guide element to the first transmission element, the rotational movement applied to the first transmission element is no longer transmitted to the torsion bar but goes directly from the first transmission element to the guide element.

In this way, the torsion bar is bypassed, and its torsion is limited. This configuration thus prevents any play in the steering wheel, even when the engine is off and the steering system is not supplied with pressurized fluid.

By unlocking the guide element from the first transmission element, the rotational movement is then transmitted from the first transmission element to the rotary valve, then to the torsion bar, and finally to the guide element. In this case, the torsion of the torsion bar is used to transmit the movement.

It should be noted that the torsion bar, in addition to transmitting torque, generates an angular offset proportional to the effort applied to the steering wheel. This angular offset occurs between the first transmission element and the guiding element due to the torsion of the bar, which makes it possible to influence the fluidic assistance of the steering system. More specifically, when the torsion bar deforms, it induces a rotation of the rotary valve relative to the first transmission element, allowing the rotary valve to take one of the predefined positions and modulate the hydraulic fluid pressure, thereby regulating the assistance applied to the piston's movement.

Thus, a decrease in torsional stiffness is observed compared to the situation where the coupling mechanism locks the guide element to the first transmission element. This configuration is generally used when the engine is running and the steering system is supplied with pressurized fluid.

Optionally in some examples, including in at least one preferred example, the coupling mechanism comprises a clutch configured to lock the guide element to the first transmission element, the clutch of the coupling mechanism comprising a first part and a second part, the first part and/or the second part comprising a plurality of trapezoidal-shaped teeth, a flat disc friction clutch, or a dog clutch with square teeth.

According to an alternative of the disclosed technology, the torsion device comprises a rigid bar fixed to the rotary valve, the coupling mechanism being configured to couple and/or decouple the rigid bar from the torsion bar.

The rigid bar has a high torsional stiffness, and more particularly, a torsional stiffness higher than the torsional stiffness of the torsion bar. Preferably, the rigid bar is a component of the steering system configured to be as rigid as possible.

When the coupling mechanism couples the rigid bar to the torsion bar, it should be understood that both the torsion bar and the rigid bar are involved in transmitting the movement of the rotary valve to the guide element. For this purpose, the rigid bar can, in this case, be connected to both the rotary valve and the guide element, and the torsion bar can be connected to both the rotary valve and the guide element.

The torsion bar and the rigid bar are therefore used simultaneously to transmit the movement of the rotary valve to the guide element. In other words, when the rotary valve performs a rotational movement, both bars transmit the rotational movement to the guide element.

The rigid bar thus contributes to the transmission of the movement to the guide element, which limits the torsion exerted on the torsion bar. As a result, the play felt in the steering wheel is reduced compared to when only the torsion bar is used.

Conversely, when the rigid bar is decoupled from the torsion bar by means of the coupling mechanism, this means that only the torsion bar is involved in transmitting the movement of the rotary valve to the guide element. For this purpose, the rigid bar can be connected only to the rotary valve or the guide element, and the torsion bar can be connected to both the rotary valve and the guide element.

In the case where the rigid bar is decoupled from the torsion bar, the torsional stiffness of the torsion bar is then is lower than the torsional stiffness of the torsion bar when both bars are coupled.

The coupling mechanism is therefore well-configured to limit the torsion of the torsion bar when required to avoid the play perceived by the driver.

Optionally in some examples, including in at least one preferred example, the coupling mechanism is configured to couple the torsion bar to the rigid bar in the fluid supply shutdown state of the steering system.

The fluid supply shutdown state is a state of the steering system in which the fluid within the steering system is no longer pressurized. This state occurs notably when the engine is turned off, for example, due to the use of technologies such as engine sailing, which consists of cutting off the engine and disengaging the clutch when the vehicle is moving at a certain speed, in order to reduce fuel consumption.

In this fluid supply down state, the fluid cannot assist in pushing the piston because the fluid is not pressurized within the steering system. As a result, the movement of the piston depends solely on the transmission of the rotational force exerted by the first transmission element on the guiding element via the rotary valve and the torsion device.

The coupling mechanism couples the rigid bar to the torsion bar in this fluid supply shutdown state. In this way, the torsion device is stiffer since the torsion of the torsion bar and the rigid bar are used to transmit the movement. As a result, the play felt at the steering wheel is reduced, as the torsion of the torsion device, and therefore of the torsion bar, is less significant.

Optionally in some examples, including in at least one preferred example, the coupling mechanism is configured to decouple the torsion bar from the rigid bar in an active fluid supply state of the steering system in which pressurized fluid is supplied to the steering system.

The active fluid supply state is a state of the steering system in which the pressurized fluid is supplied to the steering system. In this case, the pressurized fluid therefore assists the linear movement of the piston.

In this active fluid supply state, the rigidity of the torsion bar alone is sufficient and does not create play in the steering wheel, since the movement of the piston is assisted by the pressurized fluid. Thus, in this active fluid supply state, the coupling mechanism decouples the rigid bar from the torsion bar, so that only the torsion bar contributes to the rigidity of the torsion device. In this way, the rotational movement is transmitted from the first transmission element to the guide element via the rotary valve and the torsion bar, without the involvement of the rigid bar.

Optionally in some examples, including in at least one preferred example, the torsion bar extends substantially along a rotation axis of the first transmission element.

By extending substantially along the rotational axis of the first transmission element, the torsion bar is adapted to perform a torsional movement around this rotational axis.

More specifically, the torsion bar extends along the rotational axis of the first transmission element between a first end and a second end. The first end can be connected to the rotary valve, while the second end is connected to the guide element.

When the rotary valve rotates, it drives the rotation of the first end of the torsion bar. The material constituting the torsion bar then undergoes torsional deformation around the rotational axis until reaching a predefined torsion limit. Once this limit is reached, the second end of the torsion bar begins to rotate in turn, thereby transmitting the rotational movement to the guide element. For example, materials such as spring steel may be used for the torsion bar. The difference in rotation between the first end of the torsion bar and the second end corresponds to the previously mentioned angular offset.

Optionally in some examples, including in at least one preferred example, the rigid bar is arranged concentrically with the torsion bar.

In this way, the rigid bar is set up to rotate along the axis of rotation of the first transmission element.

Thus, the rigid bar is capable of transmitting the rotational movement of the rotary valve to the guide element through its torsional deformation.

Optionally in some examples, including in at least one preferred example, the coupling mechanism comprises a clutch configured to ensure the coupling between the torsion bar and the rigid bar.

The clutch allows, when disengaged, to decouple the rigid bar from the torsion bar, and when engaged, to couple the rigid bar to the torsion bar.

Thus, the clutch can be disengaged in the active fluid supply state and engaged in the fluid supply shutdown state.

Optionally in some examples, including in at least one preferred example, the clutch of the coupling mechanism comprises a first part and a second part, the first part being arranged on the coupling mechanism and the second part being arranged on the rigid bar.

In this case, the rigid bar can be connected to the rotary valve, and the coupling mechanism can be connected to the guide element.

Thus, when the first part and the second part cooperate, the rigid bar is connected to the rotary valve and to the guide element through the clutch, so that the said rigid bar can contribute to transmitting the movement of the rotary valve to the guide element.

Optionally in some examples, including in at least one preferred example, the coupling mechanism comprises an actuation means configured to engage the first part with the second part and/or disengage the first part from the second part.

The activation means is the part of the coupling mechanism that allows controlling whether the first part and the second part of the clutch are engaged or disengaged.

The activation means therefore controls whether the coupling mechanism couples or decouples the rigid bar to the torsion bar.

Optionally in some examples, including in at least one preferred example, in the fluid supply shutdown state of the steering system, the actuation means is configured to engage the first part with the second part.

Thus, by engaging the first part and the second part of the clutch in the fluid supply shutdown state, the activation means allows coupling the rigid bar to the torsion bar when the steering system is not supplied with pressurized fluid.

In this way, the rigid bar can help the torsion bar to transmit the movement of the rotary valve to the guide element, while avoiding excessive torsion of the torsion device, thereby helping to limit play in the steering wheel.

Optionally in some examples, including in at least one preferred example, in the active fluid supply state of the steering system, the actuation means is configured to disengage the first part from the second part.

Thus, when the steering system is supplied with pressurized fluid, the rigid bar is decoupled from the torsion bar.

As a result, only the torsion bar is responsible for transmitting the movement of the rotary valve to the guide element, which then carries out the linear movement of the piston, aided by the pressure provided by the pressurized fluid, ensuring that no play is felt in the steering wheel.

Optionally in some examples, including in at least one preferred example, the actuation means is electrical, electro-pneumatic, or mechano-hydraulic.

An electrical actuation means uses an electrical signal to engage or disengage the first part from the second part of the clutch.

An electro-pneumatic actuation means combines an electrical signal with the use of compressed air to allow engagement or disengagement of the first part from the second part of the clutch.

An mechano-hydraulic actuation means uses fluid and a mechanical component to enable the engagement or disengagement of the first part from the second part of the clutch.

Optionally in some examples, including in at least one preferred example, the first part and/or the second part comprises a plurality of trapezoidal-shaped teeth, a flat disc friction clutch or a dog clutch with square teeth.

These different options allow for the effective engagement of the first part and the second part of the clutch, enabling the coupling of the rigid bar to the torsion bar.

Thanks to these components, the movement is properly transmitted from the rotary valve to the guide element through the rigid bar.

It should be noted that, according to the disclosed technology, the first parts and second parts can engage independently of the orientation of the steering wheel. In other words, the aim is for the first part and the second part to engage in any relative position between the clutch parts and later return to the center position.

When the steering wheel is in the central position, engagement is not an issue. However, when the steering wheel is off-center, the engagement of the first parts and second parts may induce a directional bias, which could be dangerous. The disclosed technology prevents this directional bias phenomenon thanks to the shape of the teeth on the first parts and second parts.

To achieve this, various parameters such as angles and the friction coefficient allow the clutch to lock when the torque applied to the steering wheel reaches a certain threshold, but to release this lock and allow relative movement between the first and second parts when the applied torque does not exceed this threshold, thereby enabling the teeth to align at their center.

Thus, optionally in some examples, including in at least one preferred example, the first part and the second part of the clutch are configured to engage independently of the orientation of the steering wheel.
More particularly, the first part and the second part are configured to lock when a torque applied to the steering wheel exceeds a threshold and are configured to return to a central position when the torque applied to the steering wheel is below said threshold.

Optionally in some examples, including in at least one preferred example, the rotary valve includes a fluid channel configured to provide fluid communication between the fluid circuit and the bore of the guide element in the first position, in the second position, and in the third position of the rotary valve.

Thanks to this fluid channel, pressurized fluid can be directed into the bore of the guide element, regardless of the position of the rotary valve.

Optionally in some examples, including in at least one preferred example, the actuating means is configured to be compressed by the fluid in the bore to disengage the first part from the second part of the clutch.

For this purpose, the activation means can, for example, be a spring that, when at rest, engages the first and second parts of the clutch, and when compressed, disengages the first part and second part of the clutch.

When the steering system is in an active fluid supply state, the pressurized fluid compresses the spring, which disengages the first part and second part of the clutch. Thus, in this case, the rigid bar is decoupled from the torsion bar, so that only the torsion bar transmits the movement of the rotary valve to the guide element.

When the steering system is in a fluid supply shutdown state, the fluid is no longer under pressure, and the spring is in a decompressed state, engaging the first and second parts of the clutch. Thus, in this case, the rigid bar is coupled to the torsion bar, allowing both bars to transmit the movement of the rotary valve to the guide element

The disclosed technology also relates to a vehicle comprising a steering system as described in this document.

A vehicle equipped with such a steering system ensures a smooth and comfortable drive, whether the engine is running or not, while avoiding any danger associated with play in the steering wheel.

### BRIEF DESCRIPTION OF THE DRAWINGS

Further features, details, and advantages of the disclosed technology will become more apparent from the following description, on the one hand, and from the examples provided by way of illustration and not limitation, with reference to the accompanying drawings, on the other hand, in which:
**FIG. 1** is a schematic representation of a steering system according to a first example of the disclosed technology, said steering system being configured to be installed in a vehicle;
**FIG. 2** is a schematic representation of a torsion device of the steering system according to the first example;
**FIG. 3** is another schematic representation of the torsion device of the steering system according to the first example;
**FIG. 4** is a schematic representation of a steering system according to a second example of the disclosed technology.

### DETAILED DESCRIPTION

The features and variants of the disclosed technology can be combined with each other in various combinations, provided that they are not incompatible or exclusive of each other. In particular, it is possible to envision variants of the disclosed technology that include only a selection of features described below, independently of the other features described, if this selection of features is sufficient to provide a technical advantage and/or to distinguish the disclosed technology from the prior art.

In the figures, elements common to several figures retain the same reference.

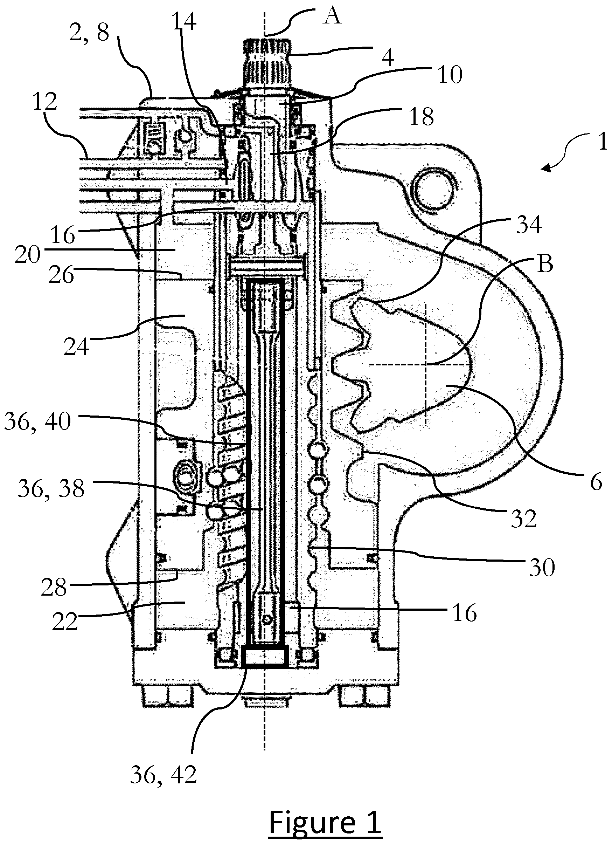

Figure 1 is a schematic representation of a steering system 1 according to a first example of the disclosed technology, said steering system 1 being configured to be installed in a vehicle.

In this example, the steering system 1 is of the hydraulic type. Said steering system 1 is thus configured, under certain conditions, to utilize the pressure of a fluid to generate a force that facilitates the steering of the vehicle's wheels.

The steering system 1 notably includes a housing 2 containing various components of said steering system 1, a first transmission element 4 configured to receive a first rotational force exerted by a steering wheel of the vehicle, and a second transmission element 6 configured to transmit this first rotational force to induce a left or right rotation of one or more of the vehicle's wheels.

To receive the first rotational force exerted by the vehicle's steering wheel, the first transmission element 4 is directly connected to the steering wheel of the vehicle.

More specifically, when the first rotational force is applied to the steering wheel, the first transmission element 4 is configured to rotate about a first rotational axis A. This first rotational force can be exerted in a first rotational direction or in a second rotational direction opposite to the first, depending on the direction in which the vehicle's steering wheel is turned.

The first rotational axis A is perpendicular to a first wall 8 of the housing 2, with the first transmission element 4 extending through this first wall 8 in order to transmit the first rotational force to other components of the steering system 1 contained within the housing 2.

The aforementioned components, which will be described below, are then configured to transmit the first rotational force to the second transmission element 6.

The second transmission element 6 is directly or indirectly connected to at least one of the vehicle's wheels. When the first rotational force is transmitted to it, the second transmission element 6 is configured to rotate about a second rotational axis B, which is perpendicular to the first rotational axis A.

Among the components of the steering system 1 that cooperate with the first transmission element 4 is a rotary valve 10. To this end, a first end of the first transmission element 4 interacts with the vehicle's steering wheel, while a second end interacts with the rotary valve 10.

Thus, when the steering wheel is turned in the first rotational direction or the second rotational direction, the rotary valve 10 is driven to rotate correspondingly in the first or second rotational direction via the first transmission element 4.

The rotary valve 10 is configured to cooperate with a fluid circuit 12 of the steering system 1. This fluid circuit 12 extends within the material of the housing 2, from an inlet of the fluid circuit 12 to a chamber in which the rotary valve 10 is positioned.

The inlet of the fluid circuit 12 can be connected to any technology capable of supplying pressurized fluid, but it is particularly configured to be fluidly connected to an engine of the vehicle, which supplies the system with pressurized fluid.

Under the effect of the first rotational force transmitted by the first transmission element 4, the rotary valve 10 is configured to rotate within the chamber about the rotational axis A, allowing it to adopt a first position, a second position, or a third position.

In the first position, the rotary valve 10 cooperates with the fluid circuit 12. More specifically, in said first position, the fluid circuit 12 is in fluid communication with a first fluid channel 14 formed within the material of the rotary valve 10, thereby allowing the fluid to flow from the fluid circuit 12 to the first fluid channel 14.

In the second position, the rotary valve 10 cooperates with the fluid circuit 12, said fluid circuit 12 being in fluid communication with a second fluid channel 16 formed within the material of the rotary valve 10, thereby allowing the fluid to flow, in the second position, from the main circuit to the second fluid channel 16.

In the third position, the rotary valve 10 is positioned such that fluid communication between the fluid circuit 12 and the first fluid channel 14, as well as fluid communication between the fluid circuit 12 and the second fluid channel 16, is blocked.

It should be noted that, regardless of the position of the rotary valve 10, the fluid circuit 12 cooperates with a third fluid channel 18 formed within the material of the rotary valve 10. In other words, in the first, second, and third positions, the fluid circuit 12 is in fluid communication with the third fluid channel 18.

In other words, in the first position, the fluid circuit 12 is in fluid communication with both the first fluid channel 14 and the third fluid channel 18. In the second position, the fluid circuit 12 is in fluid communication with both the second fluid channel 16 and the third fluid channel 18. In the third position, only the fluid circuit 12 and the third fluid channel 18 are in fluid communication.

The first fluid channel 14 and the second fluid channel 16 are respectively in fluid communication with a first chamber 20 and a second chamber 22 of the steering system 1. The said first chamber 20 and second chamber 22 are arranged within the housing 2 of the steering system 1 and are separated by a piston 24. Thus, the first chamber 20 is defined by the housing 2 and by a first side 26 of the piston 24, while the second chamber 22 is defined by the housing 2 and by a second side 28 of the piston 24.

Both chambers are configured to contain fluid originating from the fluid circuit 12. To this end, the different positions of the rotary valve 10, as defined above, determine where the fluid from the fluid circuit 12 is directed.

More specifically, when the rotary valve 10 is in the first position, the fluid from the fluid circuit 12 is directed to the first chamber 20, as the first fluid channel 14 allows fluid communication between the fluid circuit 12 and the first chamber 20 in this position.

When the rotary valve 10 is in the second position, the fluid from the fluid circuit 12 is directed to the second chamber 22, as the second fluid channel 16 allows fluid communication between the fluid circuit 12 and the second chamber 22 in this position.

When the rotary valve 10 is in the third position, the fluid from the fluid circuit 12 does not flow to either the first chamber 20 or the second chamber 22, as fluid communication between the fluid circuit 12 and both the first fluid channel 14 and the second fluid channel 16 is blocked.

As a result:
- In the first position, the fluid fills the first chamber 20, thereby increasing the pressure within said first chamber 20.
- In the second position, the fluid fills the second chamber 22, thereby increasing the pressure within said second chamber 22.
- In the third position, neither the first chamber 20 nor the second chamber 22 is filled with fluid.

The increase in pressure within one of the chambers causes the piston 24 to move in the direction in which the pressure is applied.

More specifically, when the fluid fills the first chamber 20, the pressure in the first chamber 20 acts on the first side 26 of the piston 24, causing a linear displacement of the piston 24 in a first linear direction. This linear displacement occurs in a direction parallel to the first rotational axis A. In other terms, this linear displacement of the piston in the first linear direction can be considered an axial movement.

When the fluid fills the second chamber 22, the pressure in the second chamber 22 acts on the second side 28 of the piston 24, causing a linear displacement of the piston 24 in a second linear direction opposite to the first linear direction. This linear displacement also occurs in a direction parallel to the first rotational axis A. Expressed differently, this linear displacement of the piston in the second linear direction can be considered an axial movement.

It should be noted that the movement of the piston 24 in the first linear direction increases the volume of the first chamber 20 and reduces the volume of the second chamber 22, while the movement of the piston 24 in the second linear direction increases the volume of the second chamber 22 and reduces the volume of the first chamber 20.

To achieve its movement in the first or second linear direction, the piston 24 cooperates with a guide element 30 of the steering system 1. This guide element 30 is a worm shaft that, upon rotation, drives the piston 24 in either the first or second linear direction.

The guide element 30 is arranged within the housing 2 and is specifically positioned so that its axis of rotation coincides with the first rotational axis A of the first transmission element 4. Consequently, when the piston 24 is pushed by fluid in the first linear direction, the guide element 30 rotates in the first rotational direction. Conversely, when the piston 24 is pushed by fluid in the second linear direction, the guide element 30 rotates in the second rotational direction.

It should be noted that the rotation of the guide element 30 is caused not only by the pressure exerted by the fluid in the first chamber 20 and second chamber 22 but also by the force applied by the vehicle driver on the steering wheel. For this purpose, the guide element 30 is indirectly connected to the first transmission element 4, as will be described in more detail later. Thus, when the first transmission element 4 rotates in the first rotational direction, the guide element 30 also rotates in the first rotational direction. Similarly, when the first transmission element 4 rotates in the second rotational direction, the guide element 30 rotates in the second rotational direction.

When the guide element 30 rotates in the first rotational direction, this causes the piston 24 to move in the first linear direction. Similarly, when the guide element 30 rotates in the second rotational direction, this causes the piston 24 to move in the second linear direction. The movement of the piston 24, whether in the first or second linear direction, is therefore caused by two factors: the rotation of the steering wheel, transmitted to the guide element 30 via the first transmission element 4, and the increase in fluid pressure in the first or second chamber 22.

In other words, the movement of the piston 24 results from the rotation of the steering wheel transmitted to the guide element 30, with this movement being assisted by the pressure exerted by the fluid pushing the piston 24. The piston 24 is configured to cooperate with the second transmission element 6. For this purpose, the piston 24 includes a first plurality of gear teeth 32, while the second transmission element 6 includes a second plurality of gear teeth 34. These two pluralities of gear teeth 32 and 34 are configured to engage with each other.

Through this interaction between the first plurality of gear teeth 32 and the second plurality of gear teeth 34, the linear movement of the piston 24, in either the first or second linear direction, enables the second transmission element 6 to rotate in one direction or the other. This rotational movement is then transmitted to the vehicle's wheels.

As previously mentioned, the guide element 30 is indirectly connected to the first transmission element 4. More specifically, the guide element 30 includes a bore formed within its material, inside which a torsion device 36 is housed. Part of this torsion device 36 is connected to both the guide element 30 and the rotary valve 10. In this way, the guide element 30 is connected to the first transmission element 4 via the rotary valve 10 and the torsion device 36.

In other words, the first transmission element 4 is connected to the rotary valve 10, which is in turn connected to at least one portion of the torsion device 36. This portion of the torsion device 36 is also connected to the guide element 30. The torsion device 36 in this example includes a torsion bar 38, a rigid bar 40, and a coupling mechanism 42.

It should be highlighted that the torsion bar 38 has a first end connected to the rotary valve 10 and a second end connected to the guide element 30. This torsion bar 38 extends between these two ends along the first rotational axis A, so that the torsion bar 38 is capable of undergoing torsional deformation about this first rotational axis A.

Torsion occurs when the first end of the torsion bar 38 rotates around the first axis of rotation A, while the second end does not rotate immediately. This creates a deformation in the torsion bar 38.

When a rotational force is applied to the steering wheel, it causes the first transmission element 4 to rotate, which then rotates the rotary valve 10. As the rotary valve 10 turns, the first end of the torsion bar 38 also rotates, while the second end initially remains stationary. This difference in motion creates torsion within the torsion bar 38. Once the torsion limit of the torsion bar 38 is reached, the second end begins to rotate, which causes the guide element 30 to turn. As previously mentioned, this rotation of the guide element 30 then moves the piston 24, which in turn causes the second transmission element 6 to rotate, ultimately steering the vehicle's wheels.

The rigid bar 40 is positioned concentrically around the torsion bar 38. In this context, "concentric" means that the rigid bar 40 encircles the torsion bar 38 along the first axis of rotation A. The rigid bar 40 is designed to rotate along the first axis of rotation A with a higher torsional resistance compared to the torsion bar 38. It is connected to the rotary valve 10 at one end and, indirectly, to the guide element 30 at the other end.

A coupling mechanism 42 allows the motion of the rigid bar 40 to either be linked to or disconnected from the motion of the torsion bar 38. This means that the movements of the rigid bar 40 mirror those of the torsion bar 38 when the two are coupled.

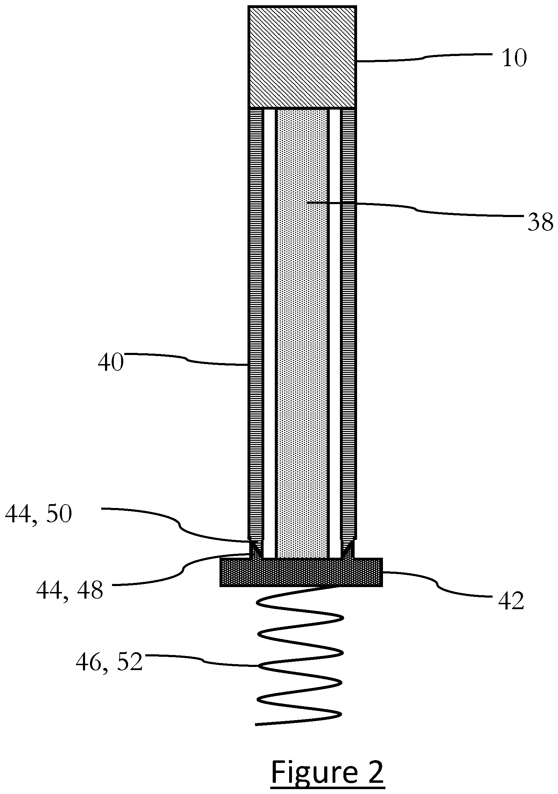

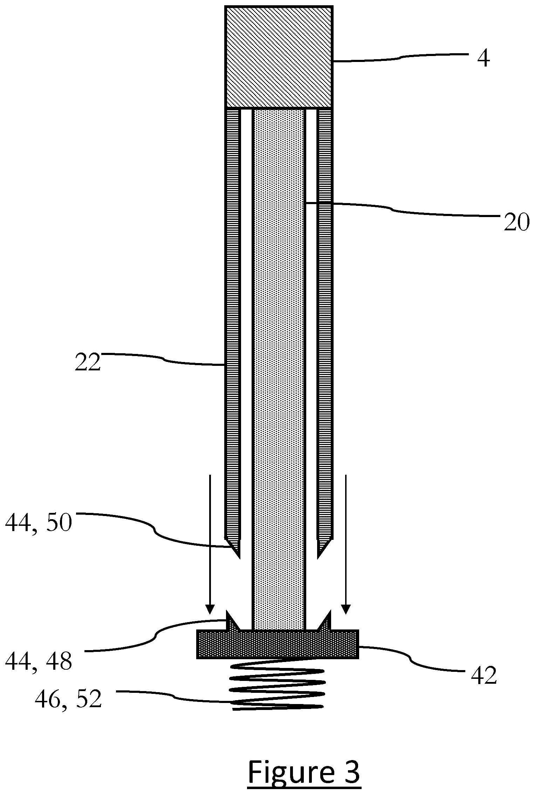

More specifically, the coupling mechanism 42, as illustrated in figures 2 and 3, is designed to either connect or disconnect the second end of the rigid bar 40 to the guide element 30. When the rigid bar 40 is disconnected, it is only linked to the rotary valve 10. As a result, when the rotary valve 10 turns, the rigid bar 40 also rotates, but without transmitting its movement. In this state, the motion of the rigid bar 40 is independent of the torsion bar 38.

On the other hand, when the rigid bar 40 is connected, it is linked to both the rotary valve 10 and the guide element 30. As the rotary valve 10 rotates, the rigid bar 40 drives the rotation of the guide element 30. Consequently, in this connected state, the motion of the rigid bar 40 is coupled with that of the torsion bar 38.

It should be noted that whether the torsion bar 38 and the rigid bar 40 are coupled or not affects the overall torsional behavior of the torsion device 36. When the two bars are uncoupled, the transmission of rotational force to the guide element 30 occurs exclusively through the torsion bar 38, meaning only the stiffness of this torsion bar is engaged. In contrast, when the two bars are coupled, the rotational force is transmitted via both bars, and their combined stiffness is utilized.

The increased stiffness provided by the rigid bar 40 is particularly beneficial in certain driving scenarios. For example, during normal driving with the engine running, steering system 1 is supplied with fluid. In this scenario, the fluid assists in pushing the piston 24, facilitating the movement of the wheels. This movement is driven by two factors: the rotation of the steering wheel, which turns the first transmission element 4, the rotary valve 10, the torsion bar 38, and the guide element 30; and the fluid pressure that directly pushes the piston 24. This situation, referred to as an "active fluid supply state," provides smooth and comfortable steering without noticeable jerks at the steering wheel.

In contrast, during a scenario called a "fluid supply shutdown state," no fluid pressure is delivered to the steering system 1. Here, the movement of the piston 24 depends solely on the force applied to the steering wheel, without any fluid assistance. However, due to the torsion of the torsion bar 38, the steering system exhibits a delay before the guide element 30 rotates and the piston 24 moves to turn the wheels. This delay results in noticeable slack in the steering wheel. This phenomenon, described as "play," can lead to imprecise steering behavior, affecting the controllability of the vehicle.

This is why the addition of the rigid bar 40 addresses this issue by increasing the rigidity of the torsion device 36. In this way, the steering play sensation is eliminated, resulting in much more stable and safe driving, even in a state where fluid supply is interrupted.

Thus, the coupling mechanism 42 is configured to either couple or decouple the rigid bar 40 from the torsion bar 38, depending on whether the system is in a fluid-supply-off state (or fluid supply shutdown state) or an active fluid-supply state. Specifically, as will be described with reference to Figures 2 and 3, in the fluid-supply-off state, the coupling mechanism 42 couples the rigid bar 40 to the torsion bar 38, whereas in the active fluid-supply state, the coupling mechanism 42 decouples the rigid bar 40 from the torsion bar 38.

Figures 2 and 3 schematically represent the torsion device 36 of the steering system 1 according to the first example. Figure 2 depicts the torsion device 36 when the rigid bar 40 is coupled to the torsion bar 38, while Figure 3 shows the torsion device 36 when the rigid bar 40 is decoupled from the torsion bar 38.

To couple the torsion bar 38 to the rigid bar 40, the coupling mechanism 42 includes a clutch 44 and an actuation means 46.

More specifically, the clutch 44 consists of a first part 48 and a second part 50, designed to cooperate with one another. When these parts cooperate, they are engaged and enable the transmission of motion from one part to the other. Conversely, when they do not cooperate, they are disengaged and do not transmit motion.

Various mechanisms can be employed to facilitate cooperation between the first part 48 and the second part 50. For example, trapezoidal teeth may be used, or coupling mechanisms such as a flat friction disk clutch or a dog clutch with square teeth.

The first part 48 of the clutch 44 may be positioned on the actuation means 46 of the coupling mechanism 42, this actuation means 46 being connected to the guide element 30. Meanwhile, the second part 50 of the clutch 44 may be arranged on the rigid bar 40, specifically at its second end.

Accordingly, the first end of the rigid bar 40 is non-detachably connected to the rotary valve 10, while the second end of the same torsion bar can be connected to the actuation means 46, and thus to the guide element 30, in a detachable manner.

As for the torsion bar 38, it is connected on one end to the valve via its first termination, without the possibility of detachment, and on the other end to the actuation means 46 via its second termination, also without the possibility of detachment.

The actuation means 46 enables the coupling of the first part 48 and the second part 50, so that the rigid bar 40 is connected to both the rotary valve 10 and the actuation means 46 (and thus to the guide element 30), or the decoupling of the first part 48 and the second part 50, so that the rigid bar 40 is connected only to the rotary valve 10. In all cases, regardless of whether the actuation means 46 couples or decouples, the torsion bar 38 is connected to both the rotary valve 10 and the actuation means 46 (and thus to the guide element 30).

The actuation means 46 engages or disengages the first part 48 and the second part 50 of the clutch 44 depending on the state of the steering system 1.

More specifically, when the steering system 1 is in an active fluid-supply state, the first part 48 and the second part 50 of the clutch 44 are disengaged, meaning the rigid bar 40 is only connected to the rotary valve 10, while the torsion bar 38 is connected to the rotary valve 10 and the guide element 30 via the actuation means 46. In this case, the rigidity of the torsion device 36 depends solely on the torsion bar 38.

When the steering system 1 is in a fluid-supply-off state, the first part 48 and the second part 50 are engaged, meaning the rigid bar 40 is connected to the rotary valve 10 and the guide element 30 via the actuation means 46. The torsion bar 38 is also connected to the rotary valve 10 and the guide element 30 via the actuation means 46. In this case, the rigidity of the torsion device 36 depends on both the torsion bar 38 and the rigid bar 40.

Different types of actuation means 46 can be used. As a non-limiting example, an electrical actuation means 46 may be employed, where an electrical signal is used to operate the mechanism, engaging or disengaging the first part 48 from the second part 50 of the clutch 44.

An electro-pneumatic actuation means 46 is also conceivable, where an electrical signal combined with the use of compressed air allows engagement or disengagement of the first part 48 from the second part 50 of the clutch 44.

Finally, a mechano-hydraulic actuation means 46 may be used, as is the case in the example shown in Figures 2 and 3.

In the case of a mechano-hydraulic actuation means 46, the actuation mechanism may, for instance, include a spring 52, which constitutes the mechanical component of the actuation means 46.

The spring 52 is configured so that, in its resting state, the first part 48 of the clutch 44, located on the actuation means 46, is engaged with the second part 50 of the clutch 44, positioned on the rigid bar 40. Thus, when the spring 52 is in its resting state, the rigid bar 40 is connected to the rotary valve 10 and the guide element 30 via the actuation means 46.

Conversely, when the spring 52 is compressed, the first part 48 of the clutch 44, located on the actuation means 46, is disengaged from the second part 50 of the clutch 44, positioned on the rigid bar 40. This disconnects the rigid bar 40, which is then only connected to the rotary valve 10.

To transition from the resting state to the compressed state, and thereby disengage the first part 48 of the clutch 44 from the second part 50, the steering system 1 uses the fluid within the steering system 1 when the system is in an active fluid-supply state.

For this purpose, as previously mentioned, the rotary valve 10 includes a third fluid channel 18 formed within it. This third fluid channel 18 fluidly connects the fluid circuit 12 to the bore of the guide element 30.

Thus, the fluid flows within the bore, where the torsion device 36 is located (in this example, comprising the torsion bar 38, the rigid bar 40, and the coupling mechanism 42). The torsion device 36 is therefore immersed in the fluid.

It should be noted that, regardless of the position of the rotary valve 10 (whether in the first, second, or third position), the fluid can circulate in the bore thanks to this third fluid channel.

This third fluid channel 18 allows the fluid to be pressurized in the bore of the guide element 30 when the steering system 1 is in an active fluid-supply state. This pressure exerted by the fluid compresses the spring 52 of the actuation means 46. The compression of the spring 52 causes the disengagement of the first part 48 of the clutch 44, located on the actuation mechanism, from the second part 50, situated on the rigid bar 40. As a result, only the torsion bar 38 contributes to the rigidity of the torsion device 36 and transmits the rotation of the rotary valve 10 to the guide element 30.

When the steering system 1 is in a fluid-supply-off state, no pressure is exerted on the spring 52. The first part 48 of the clutch 44 then engages with the second part 50, allowing both the torsion bar 38 and the rigid bar 40 to contribute together to the rigidity of the torsion device 36, thereby ensuring the transmission of motion from the rotary valve 10 to the guide element 30.

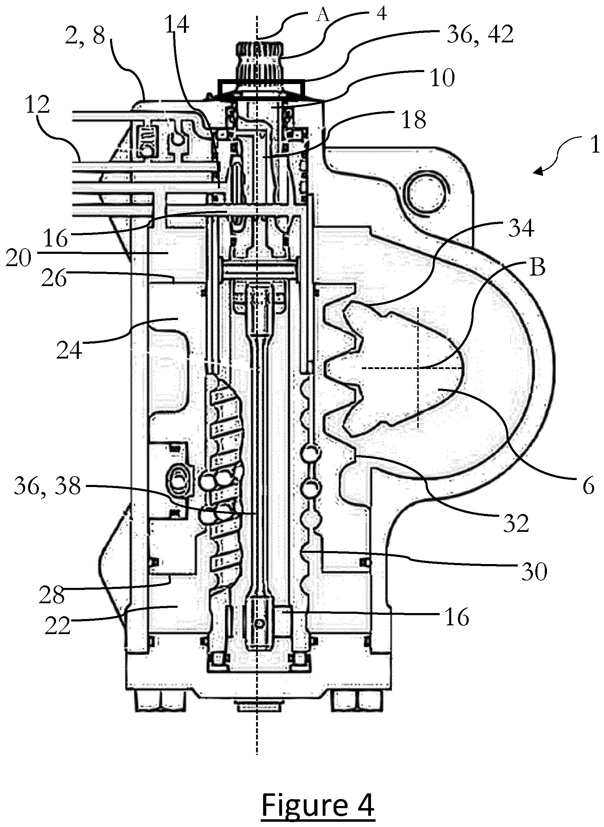

Figure 4 is a schematic representation of a steering system 1 according to a second example of the disclosed technology.

In this second example, the only difference from the first example lies in the torsion device 36.

Specifically, in this example, the torsion device 36 includes a torsion bar 38 and a coupling mechanism 42 but does not include a rigid bar 40.

The coupling mechanism 42 is positioned near the first transmission element 4, more specifically at the first wall 8 of the housing 2 of the steering system 1, where the first transmission element 4 interacts with the housing 2.

In this configuration, the coupling mechanism 42 is designed to directly couple or decouple the first transmission element 4 to or from the guide element 30.

More specifically, when the steering system 1 is in an active fluid-supply state, the first transmission element 4 is decoupled from the guide element 30. In this case, rotational motion is transmitted to the rotary valve 10, then to the torsion bar 38, and finally to the guide element 30.

When the steering system 1 is in a fluid-supply-off state, the coupling mechanism 42 connects the first transmission element 4 to the guide element 30. The rotational motion of the first transmission element 4 is then directly transmitted to the guide element 30. As a result, the motion is not transmitted through the torsion bar 38, avoiding any jerks in the steering wheel when the steering system 1 is in a fluid-supply-off state.

To enable the coupling or decoupling between the first transmission element 4 and the guide element 30, the coupling mechanism 42 may include a clutch 44, with a first part 48 of the clutch 44 positioned on the first transmission element 4 and a second part 50 on the guide element 30.

Various mechanisms can be used to allow cooperation between the first part 48 and the second part 50. For example, trapezoidal teeth, a flat friction disk clutch 44, or a dog clutch with square teeth may be considered.

The coupling mechanism 42 also includes an actuation means 46, such as an electrical, electro-pneumatic, or mechanofluidic device, to ensure the engagement or disengagement of the parts of the clutch 44.

As described above, the disclosed technology fully achieves the objectives it set out to accomplish, namely enabling smooth, play-free steering regardless of the vehicle's engine status, and thus independently of the fluid supply to the steering system. To achieve this, the disclosed technology proposes a steering system comprising a torsion device whose rigidity is adjustable based on the fluid supply to the steering system.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A steering system (1) for a vehicle, comprising a first transmission element (4), a first chamber (20), a second chamber (22), a fluid circuit (12) intended to be in fluid communication with the first chamber (20) or the second chamber (22), a piston (24), a guide element (30), a rotary valve (10), the first transmission element (4) being configured to transmit a rotational force provided by a steering wheel of the vehicle to the rotary valve (10), said rotary valve (10) being able to take:
- a first position, in which the fluid circuit (12) is in fluid communication with the first chamber (20),
- a second position, in which the fluid circuit (12) is in fluid communication with the second chamber (22),
- a third position, in which the fluid circuit (12) is fluidically isolated from the first chamber (20) and the second chamber (22),
the first chamber (20) and the second chamber (22) being separated by the piston (24), the piston (24) being configured to slide along the guide element (30) in a first direction or in a second direction depending on the position of the rotary valve (10), said piston (24) being configured to cooperate with a second transmission element (6), **characterized in that** the steering system (1) comprises a torsion device (36) arranged within a bore (16) of the guide element (30), the torsion device (36) being configured to move the rotary valve (10) from the first position or the second position to the third position, the torsion device (36) comprising :
- a torsion bar (38) fixed to the rotary valve (10) and the guide element (30),
- a coupling mechanism (42) configured to limit a torsion of the torsion bar (38) in a fluid supply shutdown state of the steering system in which no pressurized fluid is supplied to the steering system.

2. The steering system (1) according to claim 1, in which the coupling mechanism (42) is configured to lock and/or unlock the guide element (30) to the first transmission element (4).

3. The steering system (1) according to claim 1, in which the torsion device (36) comprises a rigid bar (40) fixed to the rotary valve (10), the coupling mechanism (42) being configured to couple and/or decouple the rigid bar (40) from the torsion bar (38).

4. The steering system (1) according to claim 3, in which the coupling mechanism (42) is configured to couple the torsion bar (38) to the rigid bar (40) in the fluid supply shutdown state of the steering system (1).

5. The steering system (1) according to any one of claims 3 or 4, in which the coupling mechanism (42) is configured to decouple the torsion bar (38) from the rigid bar (40) in an active fluid supply state of the steering system (1) in which pressurized fluid is supplied to the steering system (1).

6. The steering system (1) according to any one of claims 3 to 5, in which the torsion bar (38) extends substantially along a rotation axis (A) of the first transmission element (4).

7. The steering system (1) according to any one of claims 3 to 6, in which the rigid bar (40) is arranged concentrically with the torsion bar (38).

8. Steering system (1) according to any one of claims 3 to 7, in which the coupling mechanism (42) comprises a clutch (44) configured to ensure the coupling between the torsion bar (38) and the rigid bar (40).

9. The steering system (1) according to claim 8, in which the clutch (44) of the coupling mechanism (42) comprises a first part (48) and a second part (50), the first part (48) being arranged on the coupling mechanism (42) and the second part (50) being arranged on the rigid bar (40).

10. The steering system (1) according to claim 9, in which the coupling mechanism (42) comprises an actuation means (46) configured to engage the first part (48) with the second part (50) and/or disengage the first part (48) from the second part (50), said actuation means (46) being preferably electrical, electro-pneumatic, or mechano-hydraulic.

11. The steering system (1) according to claim 10 in combination with claim 4, in which, in the fluid supply shutdown state of the steering system (1), the actuation means (46) is configured to engage the first part (48) with the second part (50).

12. The steering system (1) according to any one of claims 10 or 11 in combination with claim 5, in which, in the active fluid supply state of the steering system (1), the actuation means (46) is configured to disengage the first part (48) from the second part (50).

13. The steering system (1) according to any one of claims 9 to 12, in which the first part (48) and/or the second part (50) comprises a plurality of trapezoidal-shaped teeth, a flat disc friction clutch or a dog clutch with square teeth.

14. The steering system (1) according to any one of claims 3 to 13, in which the rotary valve (10) includes a fluid channel (18) configured to provide fluid communication between the fluid circuit (12) and the bore (16) of the guide element (30) in the first position, in the second position, and in the third position of the rotary valve (10).

15. A vehicle comprising a steering system (1) according to any one of the claims 1 to 14.
